(19) Europäisches Patentamt European Patent Office Office européen des brevets

(11) **EP 4 654 300 A1**

(12) **EUROPEAN PATENT APPLICATION**
published in accordance with Art. 153(4) EPC

(43) Date of publication:
**26.11.2025 Bulletin 2025/48**

(21) Application number: **24744233.8**

(22) Date of filing: **16.01.2024**

(51) International Patent Classification (IPC):
**H01M 4/62** $^{(2006.01)}$

(52) Cooperative Patent Classification (CPC):
**H01M 4/62; Y02E 60/10**

(86) International application number:
**PCT/CN2024/072487**

(87) International publication number:
**WO 2024/153058 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.01.2023 US 202363439242 P
03.03.2023 US 202363449673 P
11.01.2024 US 202463620092 P**

(71) Applicant: **Sino Applied Technology Taiwan Co.,
Ltd.
Taoyuan, Taiwan 320030 (TW)**

(72) Inventors:
• YANG, Chih-Wei
  Taiwan 320030 (TW)
• LIU, Wen-Ren
  Taiwan 320030 (TW)
• YU, Chen-Kuo
  Taiwan 320030 (TW)
• LIANG, You-De
  Taiwan 320030 (TW)

(74) Representative: **Viering, Jentschura & Partner
mbB
Patent- und Rechtsanwälte
Am Brauhaus 8
01099 Dresden (DE)**

(54) **LITHIUM SECONDARY BATTERY AND PREPARATION METHOD THEREFOR**

(57) An embodiment of the present application proposes a lithium secondary battery (10) and a method for preparing the same. The lithium secondary battery (10) comprises a separator (12), a cathode (11), and an anode (13). The cathode (11) is disposed on one side of the separator (12). The cathode (11) comprises a cathode active material, and the cathode active material comprises a first composite material (200) based on a high-nickel material. The anode (13) is disposed on the opposite side of the separator (12). The anode (13) comprises an anode active material (M1), and the anode active material (M1) comprises a second composite material (200) formed from silicon particles (210) and a high-entropy material. The high-entropy material consists of at least five elements, and the percentage of each element in the high-entropy material does not exceed 50%.

FIG. 3B

EP 4 654 300 A1

**Description**

**TECHNICAL FIELD**

The present application relates to an electrode material and a method for preparing the same, particularly to a lithium secondary battery and a method for preparing the same, as well as to a lattice-stabilized material, a cathode active material doped with the lattice-stabilized material, methods for preparing the same and a lithium secondary battery made based on the cathode active material.

**BACKGROUND**

Artificial graphite and natural graphite are anode (also known as negative electrode) materials for lithium-ion batteries that are commonly used currently. The capacity of commercialized graphite anode is close to its theoretical capacity (372mAh/g) at present. Therefore, to increase the energy density of the battery, finding materials with a higher capacity is the next major key.

Silicon-based anodes are a primary direction for the next stage. The theoretical capacity of silicon is as high as 4200mAh/g , more than ten times that of current graphite anode materials. Silicon is abundant and low-cost, making it the most promising candidate for the next generation of lithium-ion battery anode materials. However, during the charge and discharge processes, silicon forms several crystalline phases of different proportions with lithium intercalation and deintercalation, causing severe volume effects. The expansion rate during charging can reach 300% (while the original graphite anode is only 16%), and the volume contracts during discharge. Repeated volume changes can easily lead to silicon particle cracking, material pulverization, and electrode detachment, resulting in poor cycling performance. At the same time, the expansion process can easily cause the SEI film (solid electrolyte interphase film) on the anode surface to break, and the SEI film re-forms during the discharge process. Therefore, the SEI film on the silicon surface is always in a dynamic process of destruction and reconstruction, ultimately leading to a continuous increase in SEI film thickness, increased interfacial impedance, consumption of active materials, capacity decay, and reduced coulombic efficiency, affecting the present application of silicon anodes in lithium secondary batteries.

In other words, due to the characteristics of silicon materials, the cycling performance and initial coulombic efficiency of the battery are poor, making it difficult to commercialize in practical applications.

On the other hand, the cathode (positive electrode) materials of lithium-ion batteries are generally composed of metal oxides, such as an oxide of one of manganese, nickel, cobalt, aluminum and chromium, or a combination of oxides thereof. Common cathode materials include ternary materials, such as lithium cobalt aluminum oxide ($LiCoO_2$), lithium nickel oxide ($LiNiO_2$) , or lithium iron phosphate ($LiFePO_4$). However, the development of these cathode materials has its limitations, making it difficult to simultaneously achieve high cycling efficiency, low cost, and high safety.

In addition, in ternary/quaternary cathode materials of nickel-manganese-cobalt, although increasing the nickel content can provide the advantage of high capacity, and nickel has the advantages of low cost and abundant raw material sources compared to cobalt, the reduction in cobalt content leads to a decrease in the degree of order of cations in the lattice, making the material structure gradually unstable; while the increase in nickel content causes the material to easily absorb moisture, thereby promoting the reaction of lithium ions with water and carbon dioxide, resulting in impurity deposition, which in turn causes an increase in the interfacial resistance of the cathode surface. Furthermore, due to the strong reactivity of nickel ions in the delithiated state, which is very unstable, a higher nickel content makes it easier for the solution to react with the electrolyte, leading to capacity loss during charge-discharge cycles and accelerated capacity decay in high-temperature environments. As the percentage of nickel in the material increases, the safety of the material decreases, making lithium batteries prone to thermal runaway, short circuits, and explosion hazards under conditions such as high temperature, overcharging, and over-discharging.

Lithium iron manganese phosphate is a relatively safer cathode material compared to high-nickel ternary materials, with a relatively higher working voltage, but its volumetric energy density is inferior to that of high-nickel ternary materials. In some applications, the electrode compaction density of cathodes made from lithium iron manganese phosphate is only about 2.2 g/cm$^3$, while the electrode compaction density of cathodes made from ternary materials can reach 3.4 g/cm$^3$, showing a significant gap between the two.

Some studies have proposed the use of lithium iron manganese phosphate in high-nickel ternary materials to create cathode materials, thereby improving the safety of lithium-ion batteries. However, due to the difficulty in fully and uniformly combining the existing powdered lithium iron manganese phosphate additive with ternary materials, the blending ratio of lithium iron manganese phosphate generally needs to be at least greater than 25% to effectively enhance safety. Nevertheless, constrained by the inherent low volumetric energy density of lithium iron manganese phosphate, when it is blended into ternary materials at a higher percentage, it inevitably leads to a significant reduction in the volumetric energy density of the ternary materials. Additionally, since an excessively high percentage of lithium iron manganese phosphate causes a significant change in electrode density, when adopting the blending scheme of lithium iron manganese phosphate, it is necessary to adjust the battery formulation in response to the density change, which is unfavorable for mass production or application across different products.

## SUMMARY

The present application proposes a new lithium secondary battery and a method for preparing the same to address the issues mentioned in the prior art.

The present application provides a lithium secondary battery, which includes a separator, a cathode, and an anode. The cathode is disposed on one side of the separator. The cathode includes a cathode active material, and the cathode active material includes a first composite material based on a high-nickel material. The anode is disposed on the opposite side of the separator. The anode includes an anode active material, and the anode active material includes a second composite material formed from silicon particles and a high-entropy material. The high-entropy material consists of at least five elements, and the percentage of each element in the high-entropy material does not exceed 50%.

The present application provides a method for preparing a lithium secondary battery, including: preparing a positive electrode using a cathode active material; preparing a negative electrode using an anode active material; stacking the positive electrode, a separator, and the negative electrode in an alternating manner and placing the positive electrode, the separator, and the negative electrode in an electrolyte solution; and sealing the positive electrode, the separator, and the negative electrode placed in the electrolyte solution into a mold. The cathode active material is made based on a first composite material on a basis of a high-nickel material, and the anode active material is made based on a second composite material formed from silicon particles and a high-entropy material. The high-entropy material consists of at least five elements, and a percentage of each element in the high-entropy material does not exceed 50%.

## BRIEF DESCRIPTION OF DRAWINGS

To more clearly illustrate the technical solutions in the embodiments of the present application or in the prior art, the drawings needed in the description of the embodiments or the prior art will be briefly introduced below. Obviously, the drawings in the following description are only some examples of the present application. For those of ordinary skill in the art, other drawings can be obtained based on these drawings without creative effort.

FIG. 1 is a schematic diagram of the configuration of a lithium secondary battery in some examples of the present application;

FIG. 2A is a schematic diagram of the composition of a cathode material layer in some examples of the present application;

FIG. 2B is a schematic diagram of the composition of an anode material layer in some examples of the present application;

FIG. 3A is a schematic diagram of the cross-sectional structure of the cathode active material in some examples of the present application;

FIG. 3B is a schematic diagram of the cross-sectional structure of the anode active material in some examples of the present application;

FIG. 4 is a schematic diagram of the steps in the preparation method of the cathode active material according to some examples of the present application;

FIGS. 5 and 6 are schematic diagrams of the steps in the preparation method of the anode active material according to some examples of the present application;

FIG. 7 is a schematic diagram of the steps in the preparation method of a lattice-stabilized material according to some examples of the present application;

FIG. 8 shows the X-ray diffraction analysis results of the anode active material produced in Experimental Example 1;

FIG. 9 is a scanning electron microscope image of the anode active material produced in Experimental Example 4;

FIG. 10 is a transmission electron microscope image of the anode active material produced in Experimental Example 2;

FIG. 11 shows the test results of the lithium secondary battery manufactured in Experimental Example 15 after activation;

FIG. 12 shows the test results of the safety nail puncture test conducted on the lithium secondary battery manufactured in Experimental Example 16 and Comparative Example 2;

FIG. 13 shows the test conditions for the safety nail puncture test conducted on Experimental Example 16 and Comparative Example 2;

FIG. 14 shows a comparison of scanning electron microscope images of the positive electrodes manufactured in Experimental Example 19 and Comparative Example 6;

FIG. 15 shows a photograph of the nail puncture experiment conducted on the lithium battery based on Comparative Example 6;
FIG. 16 shows a photograph of the nail puncture experiment conducted on the lithium battery based on Comparative Example 5; and
FIG. 17 shows a photograph of a nail puncture test conducted on a lithium battery fabricated based on Experimental Example 18.

## DESCRIPTION OF EMBODIMENTS

To make the features and advantages of the present application more apparent and easier to understand, the specific embodiments of the present application are described in detail below with reference to the accompanying drawings. The following description contains specific information related to the exemplary embodiments in the present application. The drawings and their accompanying detailed descriptions in the present application are merely exemplary embodiments. However, the present application is not limited thereto exemplary embodiments. Those skilled in the art will envision other variations and embodiments of the present application. Unless otherwise stated, the same or corresponding elements in the drawings may be indicated by the same or corresponding reference signs. Additionally, the drawings and illustrations in the present application are generally not drawn to scale and are not intended to correspond to actual relative dimensions.

For the sake of consistency and ease of understanding, the same features are labeled with reference signs in the exemplary drawings (although in some examples they are not labeled as such). However, features in different embodiments may differ in other aspects, and therefore should not be narrowly limited to the features shown in the drawings.

The terms "first," "second," and "third" in the description of the present application and the aforementioned drawings are used to distinguish different objects, regions, layers, or steps, rather than to describe a specific order (unless explicitly required in the claims). Additionally, the term "comprising" and any variations thereof are intended to cover non-exclusive inclusion. The term "consisting of" is interpreted as exclusive inclusion, meaning that any additional structural configurations and/or material additions are not covered by this term. However, those skilled in the art should understand that in actual testing processes, any material may be subject to unintended contamination or the inclusion of trace impurities. Since these detected trace impurities do not substantially affect the material, properties, and/or structure defined by this term, they are not considered as additional structures and/or material additions, as preemptively stated here.

The terms "connected" or "coupled" mentioned in the present application do not limit the absence of any intervening objects between the connected or coupled objects. That is, the connection or coupling between two objects may indicate that the two objects are directly connected/coupled or connected/coupled through other objects.

In all descriptions related to specific numerical values in the present application, although not directly stated, they all imply the meanings of "approximately" or "substantially," meaning that these specific numerical values will encompass possible ranges of numerical errors, thereby reflecting potential unexpected impacts and deviations in the process or material selection. The mentioned range of numerical errors can include variations that do not significantly alter the structure, properties, or effects of the material, such as a deviation range of 0% to 10%, which is clear to those having ordinary skill in the art.

The spatial relationships mentioned in the present application, such as "above," "below," "upward," "downward," "to the left of," and "to the right of," are exemplary descriptions based on the relative positions presented in the drawings and are not intended to limit the actual configuration state of the material structure.

In the present application, the terms anode and negative electrode are interchangeable, and the terms cathode and positive electrode are interchangeable.

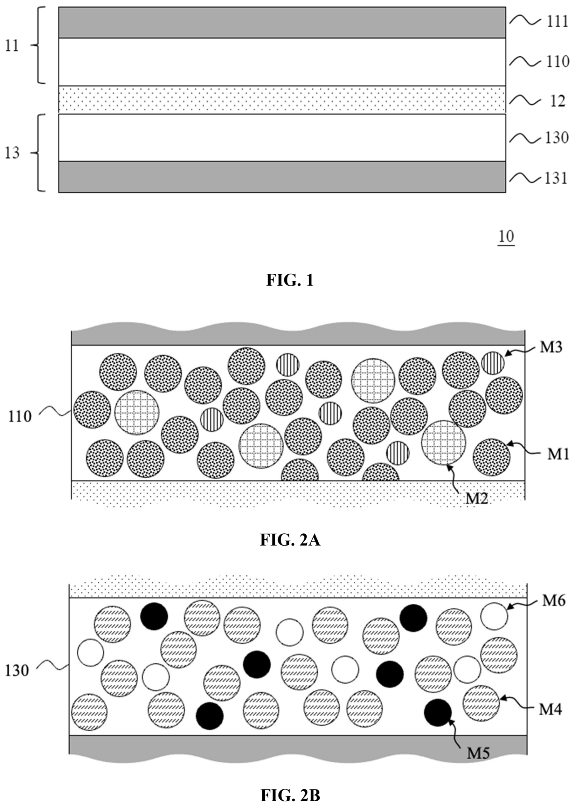

FIG. 1 is a schematic diagram of the configuration of a lithium secondary battery according to some examples of the present application. Referring to FIG. 1, the lithium secondary battery 10 of this example includes a cathode electrode 11, a separator 12, and an anode electrode 13. The cathode electrode 11 includes a cathode material layer 110 and a cathode current collector 111, and the anode electrode 13 includes an anode material layer 130 and an anode current collector 131. The cathode electrode 11 and the anode electrode 13 are disposed on the two sides of the separator 12. More specifically, the cathode material layer 110 is disposed between the cathode current collector 111 and the separator 12 (as shown in the drawing, it is placed on the upper side of the separator 12), and the anode material layer 130 is disposed between the anode current collector 131 and the separator 12 (as shown in the drawing, it is placed on the lower side of the separator 12).

When the lithium secondary battery 10 is charged, lithium ions are deintercalated from the cathode material layer 110 and, via the electrolyte, pass through the separator 12 to be intercalated into the anode material layer 130; conversely, when the lithium secondary battery 10 is discharged, lithium ions are deintercalated from the anode material layer 130 and, via the electrolyte, pass through the separator 12 to be intercalated into the cathode material layer 110, at which point, due to valence balance, electrons are output from the cathode current collector 111.

In this example, the cathode material layer 110 may be formed based on one or more cathode active materials, and at least one of the cathode active materials may be implemented, for example, as a composite material based on a high-nickel material (also referred to as a cathode composite material/first composite material). In the cathode composite material, the high-nickel material refers to a material in which nickel is the center metal for electrochemical redox reactions, and the molar ratio of nickel atoms in the material exceeds 50%. The high-nickel material may include, for example, materials based on a lithium nickel oxide structure. The anode material layer 130 may be formed based on any feasible anode active material, though the present application is not limited thereto. One of the anode active materials may be implemented, for example, using a composite material based on silicon particles (also referred to as an anode composite material/second composite material).

By using the silicon particle-based anode composite material as the anode active material for the lithium secondary battery 10, it can address the volume effect of silicon during charge and discharge processes, provide better charge and discharge performance and capacity, and also offer improved oxidation resistance. On the other hand, by using the high-nickel material-based cathode composite material as the cathode active material for the lithium secondary battery 10, it can reduce the risk of thermal runaway in the cathode material layer 110 and prevent excessive material expansion that could lead to battery short circuits and explosions, thereby further enhancing the safety of the lithium secondary battery 10.

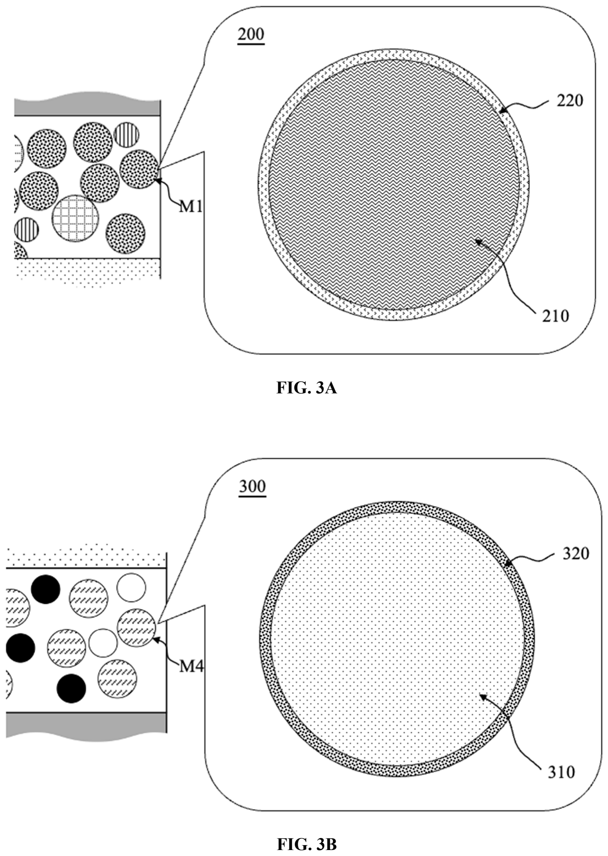

FIG. 2A and FIG. 3A below are used to further illustrate the composition of the cathode material layer 110 and the specific structure of the cathode composite material. FIG. 2A is a schematic diagram of the composition of the cathode material layer in some examples of the present application, and FIG. 3A is a schematic cross-sectional structure diagram of the cathode active material in some examples of the present application.

Please refer to both FIG. 2A and FIG. 3A. The cathode material layer 110 in this example includes the cathode active material M1, which is implemented as the composite material 200 shown in FIG. 3A. Specifically, the composite material 200 includes a high-nickel material 210 and a lattice-stabilized material 220. The lattice-stabilized material 220 is formed on at least a partial region of a surface of the high-nickel material 210. In other words, the lattice-stabilized material 220 in the composite material 200 covers the high-nickel material 210 to form a double-layer structure.

In some examples, the cathode material layer 110 further includes a conductive material M2, which can be any material that is conductive and does not cause chemical changes in the battery, such as graphite (including artificial graphite or natural graphite), conductive carbon black, conductive fibers, conductive metal oxides, or polyphenyl derivatives.

In some examples, the cathode material layer 110 may further include a binder M3 to enhance the bonding force between the separator 12 and the cathode current collector 111. In some examples, the cathode material layer 110 may further include a filler.

Specifically, the cathode active material/cathode material disclosed in this example includes a composite material (also referred to as a cathode composite material or a high-nickel cathode composite material) formed from a high-nickel material and a lattice-stabilized material. The lattice-stabilized material is formed on at least a partial region of a surface of the high-nickel material, and the percentage of nickel in the high-nickel material is not less than 50%. The percentage can be expressed as atomic percentage or weight percentage. The lattice-stabilized material is, for example, nanoscale lithium iron manganese phosphate ($LiFe_{1-x}Mn_xPO_4$, LFMP) or lithium iron phosphate ($LiFePO_4$), which has an olivine structure and can effectively stabilize the surface stability of the high-nickel material, reduce the risk of thermal runaway in the cathode material, and prevent excessive material expansion that could lead to battery short circuits and explosions.

In addition, since the cathode composite material in the embodiments of the present application has higher stability compared to conventional high-nickel materials, water can be used as the solvent system in the preparation process, in addition to organic solvents. Compared to using organic solvents as the solvent system, water is non-toxic, harmless, highly safe, low-cost, easily accessible, and easy to recycle and reuse, thereby further optimizing the cost and safety of the overall preparation process.

FIG. 2B and FIG. 3B below are used to further illustrate the composition of the anode material layer 130 and the specific structure of the composite material. FIG. 2B is a schematic diagram of the composition of the anode material layer in some examples of the present application, and FIG. 3B is a schematic cross-sectional structure diagram of the anode active material in some examples of the present application.

Please refer to both FIG. 2B and FIG. 3B. The anode material layer 130 of this example includes the anode active material M4, which is implemented by the composite material 300 as shown in FIG. 3B. Specifically, the composite material 300 contains silicon particles 310 and a high-entropy material 320. The high-entropy material 320 is formed on at least a partial region of surfaces of the silicon particles 310. In other words, the high-entropy material 320 in the composite material 300 covers the silicon particles 310 to form a double-layer structure of high-entropy silicon composite material.

In some examples, the anode material layer 130 further includes a conductive material M5, which can be any material that is conductive and does not cause chemical changes in the battery, such as graphite (including artificial graphite or natural graphite), conductive carbon black, conductive fibers, conductive metal oxides, or polyphenylene derivatives.

In some examples, the anode material layer 130 may further include a binder M6 to enhance the bonding force between the separator 12 and the anode current collector 131. In some examples, the anode material layer 130 may further include a filler.

Specifically, the anode active material/anode material disclosed in this example includes a composite material formed by silicon particles and a high-entropy material. The high-entropy material is formed on at least a partial region of surfaces of the silicon particles, and the high-entropy material consists of at least five elements, with each element accounting for no more than 50% in the high-entropy material. The percentage can be atomic percentage or weight percentage. The high-entropy material can also be called a multi-component material, and the composite material can also be called a high-entropy silicon composite material.

The composite material can enhance the conductivity of silicon materials (such as the aforementioned silicon particles) by coating them with a high-entropy material, thereby improving the conductivity of silicon materials. The high-entropy material can be a material formed by five or more elements, overturning the past concept that adding more types of elements to a material would make it more brittle. Furthermore, the high-entropy material fully utilizes the effect of high disorder of multiple elements; by randomly dispersing the atoms of each element, the formation of brittle compounds is inhibited, giving the material greater toughness, and oxidation resistance can be increased, thereby suppressing the expansion of silicon and enhancing corrosion resistance. Therefore, the composite material formed by coating the silicon material with this high-entropy material can effectively improve the cycling and expansion issues of lithium secondary batteries.

Optionally, the high-entropy material may include at least one of high-entropy alloys, high-entropy oxides, high-entropy polymer compounds, and high-entropy ceramics.

More specifically, this example discloses a composite material formed by combining a high-entropy material with at least one region on surfaces of silicon particles. The composite material can be an amorphous oxide, with a chemical formula such as $Si_{1-(x+y+m+n+z)}(M_xN_yA_mB_nX_z)O_p$, where p = 0.1 - 2, M is, for example, a monovalent element, N is, for example, a divalent element, A is, for example, a trivalent element, B is, for example, a tetravalent element, and X is, for example, a transition metal element or other valence elements. In some examples, x, y, m, n and z can each be less than or equal to 0.2.

In some examples, M can be selected as lithium or sodium elements, N can be selected as beryllium, magnesium, calcium, strontium, or barium, A can be selected as boron, aluminum, gallium, or indium, B can be selected as carbon, silicon, germanium, tin, or lead, and X can be any element. By mixing the precursors of the above different elements and conducting a synthesis reaction between silicon materials, followed by appropriate heat treatment, a high-entropy material can be formed on the silicon material and used as the anode material for lithium batteries.

The silicon particles coated with the high-entropy material can utilize pure silicon wafers or N -type or P -type silicon wafers commonly used in semiconductor processes as the silicon source, where the doping amount of Group III-V elements is, for example, 0.001%-2% by weight. During the preparation process, the silicon material can be ground into powder before the reaction, with the particle size controlled below 10 $\mu$m to facilitate the subsequent processing of the composite high-entropy material.

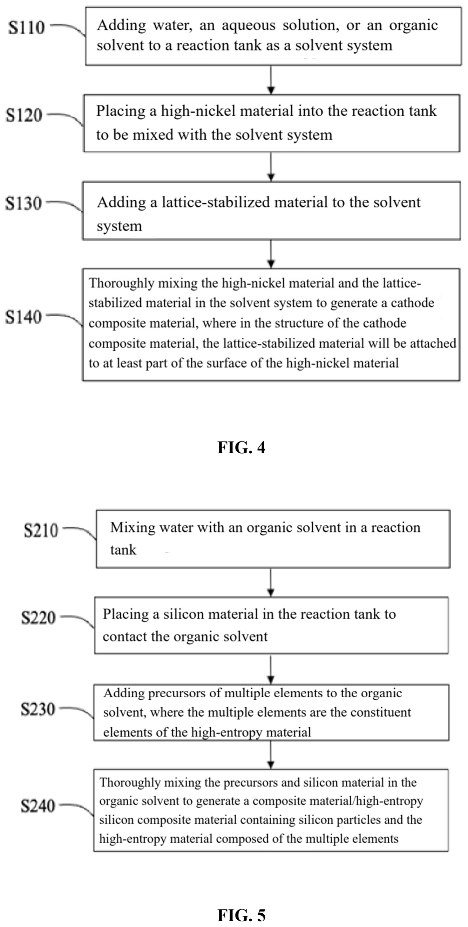

FIG. 4 below specifically illustrates an embodiment of a cathode material manufacturing method according to the present application, where FIG. 4 is a schematic diagram of the steps in the preparation method of the cathode active material in some examples of the present application. Please refer to FIG. 4 first. In this example, the preparation method of the cathode active material includes the following steps: adding water, an aqueous solution, or an organic solvent to a reaction tank as a solvent system (step S110); placing a high-nickel material into the reaction tank to be mixed with the solvent system (step S120); adding a lattice-stabilized material to the solvent system (step S130); thoroughly mixing the high-nickel material and the lattice-stabilized material in the solvent system to generate a cathode composite material, where in the structure of the cathode composite material, the lattice-stabilized material will be attached to at least part of a surface of the high-nickel material (step S140).

In step S110, when water is used as the solvent system, the water can be deionized water or any type of purified water; when an aqueous solution is used as the solvent system, in addition to the aforementioned types of water, any substance soluble in water can be added to assist subsequent reactions; when an organic solvent is used as the solvent system, the organic solvent may include pyrrolidone compounds, such as N-Methyl-2-pyrrolidone (NMP).

In step S120, the added high-nickel material can be any material with a nickel content higher than 50%, such as lithium nickel cobalt aluminum oxide ($LiNi_{1-x-y}Co_xAl_yO_2$, NCA), lithium nickel manganese cobalt oxide ($LiNi_{1-x-y}Mn_xCo_yO_2$, NMC) or $LiNi_{1-x-y}Co_xMn_yO_2$ (NCM), etc., though the present application is not limited thereto. In this step, one or more of the following can also be added to the solution: conductive carbon, dispersant, surfactant, carbon precursor, thickener, and binder. The conductive carbon can be conductive carbon materials such as carbon nanotubes, graphene, Super P, acetylene black, Ketjen black, nanohorn, and vapor-deposited carbon. The binder can be, for example, polyvinylidene fluoride (PVDF) or styrene-butadiene rubber (SBR), though the present application is not limited thereto. The thickener can be, for example, carboxymethyl cellulose (CMC), although the present application is also not limited thereto.

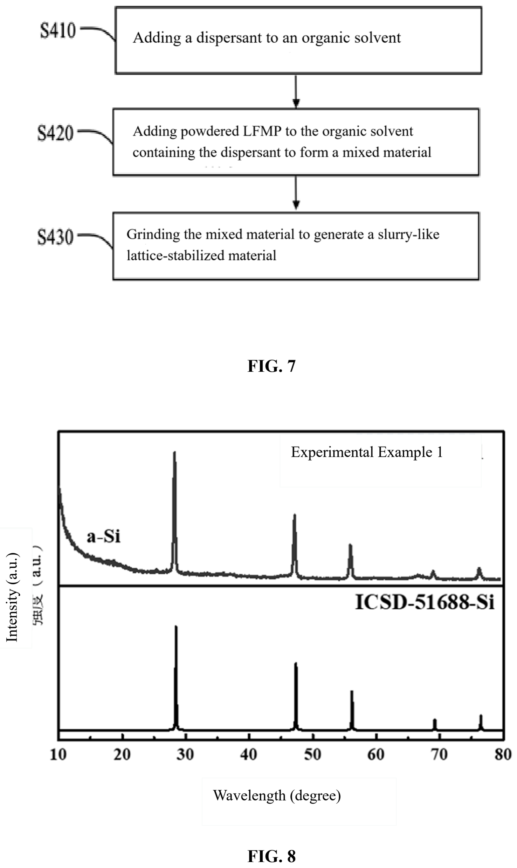

In step S130, the lattice-stabilized material can be, for example, LFMP. In some examples, lithium iron manganese phosphate can first be dissolved in a solvent (e.g., deionized water or NMP) to form nano- or submicron-sized particles dispersed in the solvent, which are then added to the solution in step S120. The solid content of LFMP in the solvent can be, for example, 30%-50%, preferably 40%, though the present application is not limited thereto. The added LFMP accounts for 3%-10% of the total cathode active material solution, preferably 5%, but the present application is also not limited thereto. Subsequent FIG. 7 will further illustrate the preparation process of the lattice-stabilized material.

In step S140, the thoroughly mixed high-nickel material and lattice-stabilized material will form the structure of the cathode composite material M1 as described in FIG. 3A, which serves as the cathode active material for lithium batteries.

In some examples, the aforementioned high-nickel composite material/cathode composite material can be coated onto a cathode current collector (e.g., copper foil or aluminum foil) after the solution is uniformly stirred to prepare the positive/cathode electrode (e.g., 11).

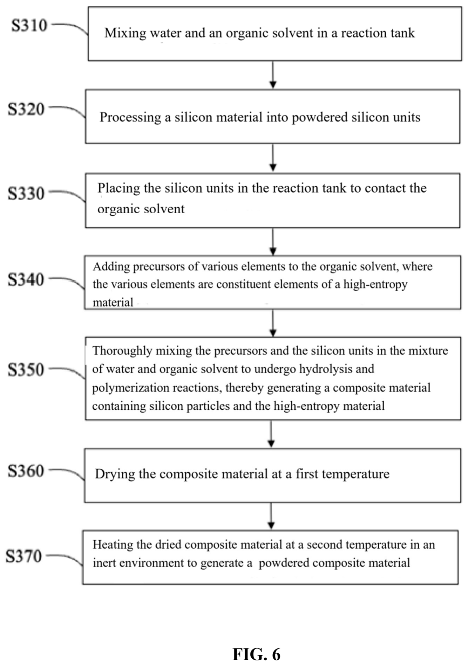

FIG. 5 and FIG. 6 below specifically illustrate an embodiment of the anode material manufacturing method according to the present application, where FIG. 5 and FIG. 6 are schematic diagrams of the steps in the preparation method of the anode active material in some examples of the present application. Please refer to FIG. 5 first. In this example, the preparation method of the anode active material includes the following steps: mixing water with an organic solvent in a reaction tank (step S210); placing a silicon material in the reaction tank to contact the organic solvent (step S220); adding precursors of multiple elements to the organic solvent, where the multiple elements are the constituent elements of the high-entropy material (step S230); thoroughly mixing the precursors and silicon material in the organic solvent to generate a composite material/high-entropy silicon composite material containing silicon particles and the high-entropy material composed of the multiple elements (step S240).

The organic solvent may include alcohols (such as methanol, ethanol, isopropanol IPA) and one or more mixed solvents (such as dispersants, surfactants, conductive carbon, and carbon precursors), though the present application is not limited thereto. The conductive carbon may be conductive carbon materials such as carbon nanotubes, graphene, Super P, acetylene black, Ketjen black, nanohorns, and vapor-deposited carbon.

In step S210, the mixing ratio of water to organic solvent may be 50/50, though the present application is not limited thereto.

In step S220, the added silicon material may be N-type, P-type silicon material, or undoped III-V modified pure silicon. The inorganic materials include one or more of the following: silicon, silicon powder, mixed powder of silicon and other metals, silicon-inorganic mixture, silicon alloy, silicon wafer, and waste slurry from silicon engineering, though the present application is not limited thereto. The particle size of the silicon powder may be controlled, for example, between $1\mu m$ - $10\mu m$.

In step S230, polyvinylpyrrolidone and silane may also be added to the solution to prevent agglomeration or precipitation during the formation of the composite material. The weight percentage concentration of the added polyvinylpyrrolidone may be 0.01-1%. In some examples, the weight percentage concentration of the added polyvinylpyrrolidone is 0.01%-0.7%, which has a better effect. In addition, the weight percentage concentration of silane in the organic solvent may be 10%-80%. In some examples, the weight percentage concentration of the added silane is 40%-80%, which has a better effect.

In step S240, precursors of various elements may undergo hydrolysis and polymerization reactions in the mixed solution of water and organic solvent to generate a high-entropy material, which is mixed with silicon materials to form a colloidal suspension. The high-entropy material will coagulate with the silicon materials in the colloidal suspension, allowing the high-entropy material to attach to at least part of surfaces of the silicon particles, thereby forming the composite material. In some examples, the above step S240 may be implemented using the sol-gel method.

In other words, in the above steps S210-S240, by placing silicon powder in a solvent mixed with water and organic solvent, where water and organic solvent are mixed in an appropriate ratio, dissolving and adding at least five different elements into the reaction tank, and synthesizing them using an appropriate method (such as the sol-gel method), followed by drying, crushing, and high-temperature sintering, the high-entropy silicon composite material can be prepared.

FIG. 6 below is used to further illustrate an implementation example of the detailed step-by-step process of the method for preparing the aforementioned anode active material. Referring to FIG. 6, the method for preparing the anode active material in this example includes the following steps: mixing water and an organic solvent in a reaction tank (step S310); processing a silicon material into powdered silicon units (step S320); placing the silicon units in the reaction tank to contact the organic solvent (step S330); adding precursors of various elements to the organic solvent, where the various elements are constituent elements of a high-entropy material (step S340); thoroughly mixing the precursors and the silicon units in the mixture of water and organic solvent to undergo hydrolysis and polymerization reactions, thereby generating a composite material containing silicon particles and the high-entropy material (step S350); drying the composite material (step S360); and heat-treating the dried composite material to generate the final powdered composite material (step S370).

Specifically, after completing steps S310 to S350, the composite material is essentially formed but remains mixed in the solution. Through subsequent steps S360 and S370, the composite material can be further separated as anode active material.

In the drying step S360, it can be implemented by drying the gel-like composite material in an inert environment (such as an oxygen-free environment, which can be vacuum or non-vacuum) at a first temperature, where the first temperature can, for example, be between 50°C - 150°C , preferably 120°C.

Next, in the heat treatment step S370, it can be implemented by heating the dried gel in an inert environment at a second temperature, where the second temperature can, for example, be between 900°C-1500°C . In some examples, the heating time for step S270 can be between 2 - 5 hours. After the heat treatment, the powdered composite material can be separated. The heat-treated composite material is then subjected to decomposition, dispersion, and classification processes to obtain the final product of anode active material. The overall processing steps are simple, and the required processing time is short, allowing for mass production at low cost.

Furthermore, the high-entropy silicon composite material in the embodiments of the present application does not require silicon particles to have a nanoscale particle size, yet it can still enable the anode active material made from the high-entropy silicon composite material and its lithium secondary battery to achieve high cycle performance and excellent Coulomb efficiency, among other good material characteristics. As a result, there is no need to perform plasma treatment to plasmaize the silicon material during the preparation process, which further reduces the cost of the preparation process, making it more suitable for commercialization and mass production.

In some embodiments, the aforementioned high-entropy silicon composite material/anode composite material can also be used to prepare an anode electrode through the following steps: mixing a high-entropy material with graphite, where the high-entropy material accounts for no less than 5% by weight, to form an anode active material that accounts for 95% by weight of the total anode; adding 0.1% by weight of single-walled carbon nanotubes; adding a binder (e.g., 4.9% by weight of PVDF); dissolving the above mixture in an organic solvent (e.g., NMP); and coating the well-mixed solution onto a current collector (e.g., copper foil or aluminum foil) to prepare the negative/anode electrode (e.g., 13).

In other embodiments, the aforementioned binder can also be implemented using SBR. In embodiments where SBR is used as the binder, its added weight percentage can be 2.5%, and CMC can be additionally added as a thickener, with the solid content weight percentage of CMC added being, for example, 2.4%.

In actual processes, the cathode electrode can be dried under 110°C , followed by cold pressing, edge trimming, cutting, slitting, and tab welding to form a sheet as the cathode plate; the anode electrode can be dried under 100°C , followed by cold pressing, edge trimming, cutting, slitting, and tab welding to form a sheet as the anode plate. The sheet-like cathode plate, separator, and anode plate are alternately stacked, and then filled with an electrolyte solution and sealed in a plastic mold to complete the preparation of the lithium secondary battery.

FIG. 7 is a schematic diagram of the steps in the preparation method of a lattice-stabilized material in some examples of the present application. Please refer to FIG. 7. In this example, the preparation method of the lattice-stabilized material includes the following steps: adding a dispersant to an organic solvent (step S410); adding powdered LFMP to the organic solvent containing the dispersant to form a mixed material (step S420); and grinding the mixed material to generate a slurry-like lattice-stabilized material, where LFMP particles are nanoscale or submicron-scale dispersed in the slurry-like lattice-stabilized material (step S430).

The organic solvent may, for example, include pyrrolidone compounds (such as NMP), and the dispersant may, for example, include one or more of polyvinylpyrrolidone (PVP), piperazine, polyethyleneimine, N, N-dimethylaminopropylamine, diethylethanolamine, oleylamine, and quaternary ammonium salts.

In some examples, the mixing ratio of the dispersant, organic solvent, and LFMP may be 1: 15:6.5-25.

In some examples, step S410 may also include adding a suspending agent to stabilize the LFMP particles dispersed in the slurry-like lattice-stabilized material, where the suspending agent may include one or more olefin compounds, such as polyvinylidene fluoride (PVDF), vinylidene fluoride-chlorotrifluoroethylene copolymer (VDF-CTFE), polyvinyl fluoride (PVF), ethylene-chlorotrifluoroethylene copolymer (ECTFE), perfluorosulfonic acid resin (XR resin), tetrafluoroethylene-hexafluoropropylene copolymer (FEP), ethylene-tetrafluoroethylene copolymer (ETFE), tetrafluoroethylene-perfluoroalkyl vinyl ether copolymer (PFA), tetrafluoroethylene-hexafluoropropylene-perfluoroalkyl vinyl ether (EPE), polychlorotrifluoroethylene (PCTFE), and polytetrafluoroethylene (PTFE).

In some examples, the mixing ratio of the suspending agent, dispersant, organic solvent, and LFMP may be 1:20:300:130-200.

In some examples, step S410 may also include adding a flame retardant, such as a phosphazene flame retardant, to undergo endothermic decomposition during thermal runaway of lithium-ion batteries, thereby delaying the reaction process of thermal runaway.

In some examples, the mixing ratio of the phosphazene flame retardant, dispersant, organic solvent, and LFMP may be 1:2:30:13-20.

In some examples, step S420 may also include adding conductive carbon to enhance the conductivity and reactivity of the lattice-stabilized material. The conductive carbon may be conductive carbon materials such as carbon nanotubes (single-walled or multi-walled), graphene, Super P, acetylene black, Ketjen black, carbon nanohorns, and vapor-deposited carbon.

In some examples, the mixing ratio of the conductive carbon, dispersant, organic solvent, and LFMP may be 1:2:30:13-20.

The disclosure of the specific numerical values above is merely a preferred choice under the specific experimental conditions mentioned. In essence, the examples disclosed herein are not limited to the specific numerical values mentioned but also include effective deviation ranges (such as ±15%) that can achieve similar or identical optimal effects. In other words, if specific numerical values are defined in the claims, the corresponding numerical values may equally include a deviation range of plus or minus 15% (provided that the efficacy can be achieved), as stated herein.

It should be noted here that the structures and preparation methods of the cathode active material and anode active material disclosed in the different examples above can be applied individually or in combination. For example, the cathode active material implemented with a high-nickel composite material as described in the above examples, when paired with a general anode structure/material to fabricate a lithium secondary battery, can also provide the effect of optimizing battery safety. Similarly, the anode active material implemented with a high-entropy silicon composite material as described in the above examples, when paired with a general cathode structure/material to fabricate a lithium secondary battery, can also provide the effects of improving cycle efficiency and increasing capacity.

When the high-nickel composite material and high-entropy silicon composite material of the above examples are used in combination to prepare the cathode and anode electrodes of a lithium secondary battery, the performance and safety of the lithium secondary battery can be further enhanced. Additionally, by using a pure water-based solvent system in the process, environmental requirements can be met, providing the market with batteries that are both safe and high-capacity. Therefore, the technical effects achieved by the lithium secondary battery fabricated with the combination of these two composite materials are far superior to those achieved by using them individually, and they can bring unexpected advantages.

Multiple experimental examples below are provided to illustrate specific examples of the structure and preparation process of the anode composite material, lattice-stabilized material, and cathode composite material with the added lattice-stabilized material in the embodiments of the present application. Experimental Examples 1 to 6 are preparation examples of the anode active material, Experimental Examples 7 to 11 are preparation examples of the lattice-stabilized material, and Experimental Examples 12 to 20 are preparation examples of the cathode active material and lithium batteries using the same.

Procedure for Experimental Example 1: 500g of water and an organic solvent was added to a reaction tank in a 50:50 wt% ratio, where the organic solvent was ethanol, and the water contained 4% graphene and polyvinylpyrrolidone. The solvent in the reaction tank contained 2% aluminum chloride, 0.6% magnesium nitrate and 0.2% lithium carbonate. The solid content of silane in the solvent was 80%. After uniform stirring for 2 hours, 50g of silicon powder with a particle size controlled between 1 - 10μm was added and mixed. After uniform stirring and dispersion, the mixture was dried at 120°C, followed by high-temperature heat treatment in a nitrogen environment at 1100°C for 2 hours. Then decomposition, dispersion, and classification were carried out to prepare particle powder of a high-entropy silicon composite material.

Based on the anode active material, namely the high-entropy silicon composite powder, a coin-type battery with a diameter of 20 mm and a height of 3.2 mm was manufactured. The high-entropy silicon composite material contained at least 5% by weight of silicon powder; the mixture of artificial graphite and anode active material accounted for 80% by weight of the total anode, the super conductive carbon black (super P) conductive material accounted for 10% by weight of the total anode, and the polyvinylidene fluoride (PVDF) binder accounted for 10% by weight of the total anode.

FIG. 8 shows the X-ray diffraction (XRD) analysis results of the anode active material produced in Experimental Example 1. By comparing the X-ray diffraction analysis results of the powder from Experimental Example 1 with the standard silicon peak (ICSD-51688-Si), it can be confirmed that amorphous silicon compounds are generated during the process.

Procedure for Experimental Example 2: 500g of water and an organic solvent was added to a reaction tank in a 50:50 wt% ratio, where the organic solvent was isopropanol, and the water contained 4% carbon nanotubes and polyvinylpyrrolidone. The solvent in the reaction tank contained 2% aluminum nitrate, 0.6% barium nitrate, and 0.2% lithium carbonate. The solid content of silane in the solvent was 80% (only soluble in an organic solvent). After uniform stirring for 2 hours, 50g of silicon powder with a particle size controlled within 1 - 10μm was added and mixed. After uniform stirring and dispersion, the mixture was dried at 120°C, followed by high-temperature heat treatment in a nitrogen environment at 1100°C for 3 hours. Then, decomposition, dispersion, and classification were carried out to prepare particle powder of a high-entropy silicon composite material.

A coin-type battery with a diameter of 20 mm and a height of 3.2 mm was manufactured based on the anode active material, namely the high-entropy silicon composite powder. The high-entropy silicon composite material contained at least 5% by weight of silicon powder; the mixture of artificial graphite and anode active material accounted for 80% by weight of the total anode, the super conductive carbon black (super P) conductive material accounted for 10% by weight of the total anode, and the polyvinylidene fluoride (PVDF) binder accounted for 10% by weight of the total anode.

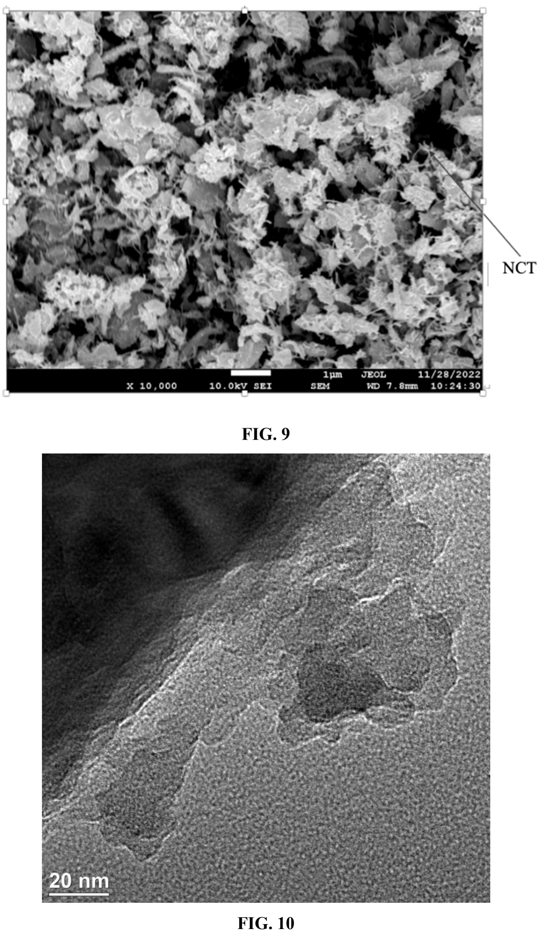

FIG. 10 is a transmission electron microscope (TEM) image of the anode active material produced in Experimental Example 2. Refer to FIG. 10, the powder sample obtained from Experimental Example 2 is observed under a transmission electron microscope, showing the formation of approximately 20 nm amorphous silicon compounds on the surface of the original silicon particles, coating the silicon anode surface.

Procedure for Experimental Example 3: 500g of an aqueous solution and an organic solvent was added to a reaction tank in a 50:50 wt% ratio. The organic solvent was ethanol, and the water contained 6% fructose and ammonia water. The solvent in the reaction tank contained 2% aluminum hydroxide, 0.6% magnesium hydroxide, and 0.25% lithium hydroxide. The solid content of silane in the solvent was 80%. After uniform stirring for 2 hours, 50g of silicon powder with a particle size controlled between 0.5 - 1$\mu$m was added and mixed. After uniform stirring and dispersion, the mixture was dried at 120°C, followed by high-temperature heat treatment in a nitrogen environment at 1100°C for 3 hours. Then, decomposition, dispersion, and classification were carried out to prepare particle powder of a high-entropy silicon composite material.

A coin-type battery with a diameter of 20 mm and a height of 3.2 mm was manufactured based on the anode active material, namely the high-entropy silicon composite powder. The high-entropy silicon composite material contained at least 5% by weight of silicon powder. The mixture of artificial graphite and anode active material accounted for 80% by weight of the total anode, the super conductive carbon black (super P) conductive material accounted for 10% by weight of the total anode, and the polyvinylidene fluoride (PVDF) binder accounted for 10% by weight of the total anode.

Procedure for Experimental Example 4: 500g of water and an organic solvent was added to a reaction tank in a 50:50 wt% ratio. The organic solvent was ethanol, and the water contained 4% carbon nanotubes and polyvinylpyrrolidone. The solvent in the reaction tank contained 2% aluminum chloride, 0.6% calcium carbonate, and 0.2% lithium carbonate. The solid content of silane in the solvent was 80%. After uniform stirring for 2 hours, 50g of silicon powder with a particle size controlled between 1 - 10$\mu$m was added and mixed. After uniform stirring and dispersion, the mixture was dried at 120°C, followed by high-temperature heat treatment in a nitrogen environment at 1100°C for 3 hours. Then, decomposition, dispersion, and classification were carried out to prepare particle powder of a high-entropy silicon composite material.

A coin-type battery with a diameter of 20 mm and a height of 3.2 mm was manufactured based on the aforementioned anode active material, namely the high-entropy silicon composite powder. The high-entropy silicon composite contained at least 5% by weight of silicon powder; the mixture of artificial graphite and the anode active material accounted for 80% by weight of the total anode, the super conductive carbon black (super P) accounted for 10% by weight of the total anode, and the polyvinylidene fluoride (PVDF) binder accounted for 10% by weight of the total anode.

FIG. 9 shows the scanning electron microscope (SEM) image of the anode active material produced in Experimental Example 4. Referring to FIG. 9, the powder sample obtained from Experimental Example 4 was observed under a scanning electron microscope, showing that uniform carbon nanotubes NCT were formed through this process, coating the silicon material and creating a good conductive network.

Procedure for Experimental Example 5: 500g of water and an organic solvent was added to a reaction tank in a 50:50 wt% ratio, where the organic solvent was ethanol, and the water contained 4% graphene and polyvinylpyrrolidone. The solvent in the reaction tank contained 2% aluminum nitrate, 0.6% barium nitrate and 0.2% lithium carbonate. The solid content of silane in the solvent was 80%. After uniform stirring for 2 hours, 50g of silicon powder with a particle size controlled between 1 - 10$\mu$m was added and mixed. After uniform stirring and dispersion, the mixture was dried at 120C, followed by high-temperature heat treatment in a nitrogen environment at 1100°C for 3 hours. Then, decomposition, dispersion, and classification were carried out to prepare particle powder of a high-entropy silicon composite material.

A coin-type battery with a diameter of 20 mm and a height of 3.2 mm was manufactured based on the aforementioned anode active material, namely the high-entropy silicon composite powder. The high-entropy silicon composite contained at least 5% by weight of silicon powder; the mixture of artificial graphite and the anode active material accounted for 80% by weight of the total anode, the super conductive carbon black (super P) accounted for 10% by weight of the total anode, and the polyvinylidene fluoride (PVDF) binder accounted for 10% by weight of the total anode.

Procedure for Experimental Example 6: 500g of water and an organic solvent was added to a reaction tank in a 50:50 wt% ratio, where the organic solvent was ethanol, and the water contained 4% graphene and polyvinylpyrrolidone. The solvent in the reaction tank contained 2% aluminum nitrate, 0.6% barium nitrate, 0.2% lithium carbonate, and 0.005% yttrium nitrate. The solid content of silane in the solvent was 80%. After uniform stirring for 2 hours, 50g of silicon powder with particle size controlled between 1 - 10$\mu$m was added and mixed. After uniform stirring and dispersion, the mixture was dried at 120°C, followed by high-temperature heat treatment in a nitrogen environment at 1100°C for 3 hours. Then, decomposition, dispersion, and classification were carried out to prepare particle powder of a high-entropy silicon composite material.

A coin-type battery with a diameter of 20 mm and a height of 3.2 mm was manufactured based on the anode active material, namely the high-entropy silicon composite powder. The high-entropy silicon composite material contained at least 5% by weight of silicon powder; the mixture of artificial graphite and anode active material accounted for 80% by weight of the total anode, the super conductive carbon black (super P) conductive material accounted for 10% by weight of the total anode, and the polyvinylidene fluoride (PVDF) binder accounted for 10% by weight of the total anode.

Table 1

| | Powder Resistance (10Mpa) | Silicon Carbon Anode Charging Capacity mAh/g | Silicon Carbon Anode Discharging Capacity mAh/g | Pure Silicon Anode Migration Capacity mAh/g | 0.1C First Discharge Efficiency % | 1C Fifth Discharge Cycle Efficiency | 1C 50th Discharge Cycle Efficiency |
|---|---|---|---|---|---|---|---|
| Comparative Example 1 | 630 | 411.8 | 364.11 | 1766 | 88.42% | 98.32% | 95.30% |
| Experimental Example 1 | 0.532 | 435.31 | 395.35 | 2056.2 | 90.82% | 99.35% | 99.43% |
| Experimental Example 2 | 0.221 | 438.12 | 399.74 | 2112.4 | 91.24% | 99.45% | 99.54% |
| Experimental Example 3 | 0.458 | 428.87 | 385.90 | 1927.4 | 89.98% | 99.33% | 99.36% |
| Experimental Example 4 | 0.218 | 437.84 | 394.98 | 2106.8 | 90.21% | 99.64% | 99.14% |
| Experimental Example 5 | 0.834 | 437.12 | 397.12 | 2092.4 | 90.85% | 99.87% | 99.45% |
| Experimental Example 6 | 0.557 | 429.57 | 387.99 | 1941.4 | 90.32% | 99.86% | 99.87% |

Table 1 summarizes the relevant characteristic data of the charge-discharge efficiency for Experimental Examples 1 to 6 and Comparative Example 1. Comparative Example 1 is a coin-type battery composed of silicon-carbon anode active material (model: KSC-1265) from Shin-Etsu Chemical Co., Ltd., where the negative electrode active material /anode active material is not the composite material proposed in the present application.

According to the data of each experimental example disclosed in Table 1, the high-entropy silicon composite material produced after the modification of silicon powder performs better in conductivity, capacity, first-cycle efficiency, and multi-cycle efficiency than the currently commercialized silicon powder on the market.

Table 2

| | Original thickness of the negative electrode plate (um) | Thickness of the electrode plate after the first charge (um) | Thickness of the electrode plate after the 50th charge (um) | Percentage increase in electrode plate thickness after the first charge (%) | Percentage increase in electrode plate thickness after the 50th charge (%) |
|---|---|---|---|---|---|
| Comparative Example 1 | 46 | 51 | 64 | 11.0% | 39.0% |
| Experiment 1 | 45 | 50 | 62 | 10.0% | 38.1% |
| Experiment 2 | 42 | 45 | 57 | 8.2% | 36.4% |
| Experiment 3 | 46 | 50 | 63 | 9.2% | 37.5% |
| Experiment 4 | 40 | 43 | 54 | 8.1% | 36.2% |
| Experiment 5 | 38 | 42 | 52 | 9.8% | 38.1% |
| Experiment 6 | 41 | 45 | 56 | 9.6% | 37.4% |

Table 2 summarizes the expansion characteristics data of Experimental Examples 1 to 6 and Comparative Example 1. According to the data disclosed in Table 2, it can be seen that the high-entropy silicon composite material produced after the modification of silicon powder further reduces the expansion of the silicon anode.

Experimental Examples 7 to 11 are further described below to illustrate the preparation of a lattice-stabilized material.

Procedure for Experimental Example 7: 300g of a NMP organic solvent and 200g of LFMP powder were placed into a vertical grinding tank to be ground with a vertical sand mill to obtain LFMP powder in the sub-micron scale range for Experimental Example 7.

Procedure for Experimental Example 8: 20g of PVP as a dispersant and 300g of a NMP organic solvent were placed into a vertical grinding tank for stirring and dissolution. After PVP was completely dissolved, 180g of LFMP powder was added and ground with a vertical sand mill to obtain a LFMP slurry for Experimental Example 8.

Procedure for Experimental Example 9: 20g of PVP as a dispersant, 1.3g of PVDF as a suspending agent, and 300g of a NMP organic solvent were placed into a vertical grinding tank for stirring and dissolution. After PVP and PVDF were completely dissolved, 178.7g of lithium iron manganese phosphate powder was added and ground with a vertical sand mill to obtain a LFMP slurry for Experimental Example 9.

Procedure for Experimental Example 10: 20g of PVP as a dispersant, 1.3g of PVDF as a suspending agent, and 300g of a NMP organic solvent were placed into a vertical grinding tank for stirring and dissolution. After PVP and PVDF were completely dissolved, 168.7g of LFMP powder and 10g of multi-walled carbon nanotubes as conductive carbon were added and ground with a vertical sand mill to obtain a LFMP slurry for Experimental Example 10.

Procedure for Experimental Example 11: Place 20g of PVP as a dispersant, 1.3g of PVDF as a suspending agent, 10g of a phosphazene flame retardant, and 300g of a NMP organic solvent were placed into a vertical grinding tank for stirring and dissolution. After PVP and PVDF were completely dissolved, 158.7g of LFMP powder and 10g of multi-walled carbon nanotubes as conductive carbon were added and ground with a vertical sand mill to obtain a LFMP slurry for Experimental Example 10.

It should be noted that the dosages of PVP, PVDF, NMP, and LFMP in the above experimental examples are only described for part of the feasible experimental examples of the present application, and the examples of the present application are not limited to the above numerical ranges. More specifically, in other experimental examples, the LFMP slurry can be generated using dosage ratios that fall within the following ranges:

$$30\% < \frac{D}{A+B+C+D} \times 100\% < 60\%$$

where A, B, C, and D are the dosages of PVP, PVDF, NMP, and LFMP, respectively.

Table 3

| | Upper/Lower Layer | Day 1 (wt%) | Day 3 (wt%) | Day 5 (wt%) | Day 7 (wt%) |
|---|---|---|---|---|---|
| Experimental Example 7 | Upper Layer | 40.0 | 39.1 | 38.2 | 30.2 |
| | Lower Layer | 40.0 | 39.6 | 39.1 | 35.7 |
| Experimental Example 8 | Upper Layer | 40.0 | 40.0 | 40.0 | 40.0 |
| | Lower Layer | 40.0 | 40.0 | 40.0 | 40.0 |
| Experimental Example 9 | Upper Layer | 40.0 | 40.0 | 40.0 | 40.0 |
| | Lower Layer | 40.0 | 40.0 | 40.0 | 40.0 |
| Experimental Example 10 | Upper Layer | 40.0 | 40.0 | 40.0 | 40.0 |
| | Lower Layer | 40.0 | 40.0 | 40.0 | 40.0 |
| Experimental Example 11 | Upper Layer | 40.0 | 40.0 | 40.0 | 40.0 |
| | Lower Layer | 40.0 | 40.0 | 40.0 | 40.0 |

Table 3 above shows the results of stability tests conducted on lattice-stabilized materials prepared based on Examples 7-11 (test temperature is 55°C ). As revealed by the data of each example from Table 3, the LFMP slurry prepared by mixing and grinding dispersant, organic solvent, and LFMP exhibits excellent stability.

Examples 12 to 20 below further illustrate the preparation of cathode active materials and lithium batteries using the same.

Procedure for Example 12: a high-nickel material, a conductive agent Super-P, and a binder PVDF were mixed and uniformly dissolved in NMP at a mass ratio of 97:1.5:1.5 to prepare a cathode slurry with a certain viscosity. Then, the well-dispersed nano LFMP slurry with a solid content of 40% was added in an amount equal to 5% of the solid content of the original cathode slurry to prepare a cathode composite material with LFMP coated on the high-nickel material as the cathode active material.

Subsequently, by coating the cathode active material on an aluminum foil current collector, drying at 110°C , followed by cold pressing, edge trimming, cutting, slitting, and tab welding, the positive electrode/cathode sheet of the lithium battery was prepared. In Example 12, the above positive electrode was further paired with a negative electrode prepared through the following process (though the present application is not limited thereto) to form a lithium battery for testing. The preparation process of the negative electrode was as follows:

at least 5% by weight of a composite silicon high-entropy material was mixed with graphite to prepare an anode active material, where the anode active material accounted for 95% by weight of the total anode; single-walled carbon nanotubes were added to the anode slurry, where the solid content of the single-walled carbon nanotubes was 0.1% by weight; PVDF was added to the anode slurry, where the solid content of PVDF was 4.9% by weight; NMP was used as the solvent system for the anode slurry, and after being fully dissolved in NMP and stirred evenly, it was coated on copper foil to prepare an anode electrode; by drying at 110°C , followed by cold pressing, edge trimming, cutting, slitting, and tab welding, a negative electrode/negative plate of the lithium battery was prepared.

The above-mentioned cathode sheet and anode sheet were used as the positive electrode plate and negative electrode plate, respectively, and were configured into a lithium secondary battery and tested in the following manner: the positive electrode plate and negative electrode plate were arranged; a separator was arranged between the positive electrode plate and negative electrode plate to define an accommodating area; the positive and negative electrodes were alternately stacked and immersed in an electrolyte solution, and were placed in an aluminum mold for encapsulation and activation to be used for testing.

Procedure for Experimental Example 13: a high-nickel cathode material, carbon nanotubes, and a binder PVDF were mixed and dissolved uniformly in NMP at a mass ratio of 98.5:0.5:1 to prepare a cathode slurry with a certain viscosity; then a well-dispersed nano LFMP slurry was added to be mixed, where the solid content of the nano LFMP slurry was 40%, with a total addition of 5% of the solid content of the original cathode slurry, thereby preparing a cathode composite material with LFMP coated on the high-nickel material as a cathode active material.

Subsequently, by coating the aforementioned cathode active material on the aluminum foil current collector, then drying at 110°C , followed by cold pressing, edge trimming, cutting, slitting, and tab welding, a positive electrode/cathode sheet of the lithium battery was made. In Experimental Example 13, the aforementioned positive electrode was further paired with a negative electrode prepared through the following procedure (though the present application is not limited thereto) to form a lithium battery for testing, where the preparation procedure of the negative electrode includes the following steps:

at least 5% by weight of a composite silicon high-entropy material was mixed with graphite to prepare an anode active material, where the anode active material accounted for 95% by weight of the total anode; single-walled carbon nanotubes were added to the anode slurry, where the solid content of the single-walled carbon nanotubes was 0.1% by weight; PVDF was added to the anode slurry, where the solid content of PVDF was 4.9% by weight; the anode slurry used NMP as the solvent system, and after being fully dissolved in NMP and stirred evenly, it was coated on copper foil to prepare an anode electrode; after drying at 110°C , cold pressing, edge trimming, cutting, slitting, and tab welding were performed to prepare a negative electrode/anode sheet of the lithium battery.

The above-mentioned cathode sheet and anode sheet served as a positive electrode plate and a negative electrode plate, respectively, and were configured into a lithium secondary battery and tested in the following manner: the positive electrode plate and the negative electrode plate were arranged; a separator was arranged between the positive electrode plate and the negative electrode plate to define an accommodating area; the positive and negative electrodes were alternately stacked and immersed in an electrolyte solution, and were placed in an aluminum mold for encapsulation and activation to be used for testing.

Procedure for Experimental Example 14: a high-nickel cathode material, carbon nanotubes, and a binder PVDF were mixed and dissolved uniformly in NMP at a mass ratio of 98.5:0.5:1 to prepare a cathode slurry with a certain viscosity; then a well-dispersed nano LFMP slurry was added to be mixed, where the solid content of the nano LFMP slurry was 40%, with a total addition of 5% of the solid content of the original cathode slurry, thereby preparing a cathode composite material with LFMP coated on the high-nickel material as a cathode active material.

Subsequently, by coating the aforementioned cathode active material on the aluminum foil current collector, then drying at 110°C , followed by cold pressing, edge trimming, cutting, slitting, and tab welding, a positive electrode/cathode sheet of the lithium battery was made. In Experimental Example 14, the aforementioned positive electrode was further paired with a negative electrode prepared through the following procedure (though the present application is not limited thereto) to form a lithium battery for testing, where the preparation procedure of the negative electrode includes the following steps:

at least 5% by weight of a composite silicon high-entropy material was mixed with graphite to prepare an anode active material, where the anode active material accounted for 95% by weight of the total anode; single-walled carbon nanotubes were added to the anode slurry, where the solid content of the single-walled carbon nanotubes was 0.1% by weight; SBR was added to the anode slurry, where the solid content of SBR was 2.5% by weight; CMC was added as a thickener to the anode slurry, with weight percentage of 2.4%; the anode slurry used deionized water as a solvent system, and after fully dissolving in deionized water and stirring evenly, it was coated on copper foil to prepare an anode electrode; after drying at 100°C, cold pressing, edge trimming, cutting, slitting, and tab welding were performed to prepare a negative electrode/anode sheet of the lithium battery.

The above cathode sheet and anode sheet served as a positive electrode plate and a negative electrode plate, respectively, and configured as a lithium secondary battery for testing in the following manner:

the positive electrode plate and the negative electrode plate were arranged; a separator was arranged between the positive electrode plate and the negative electrode plate to define an accommodating area; the positive and negative electrodes were alternately stacked and immersed in an electrolyte solution, and were placed in an aluminum mold for encapsulation and activation to be used for testing.

Procedure for Experimental Example 15: a high-nickel cathode material, carbon nanotubes, a SBR binder, and a CMC thickener were mixed and dissolved uniformly in deionized water at a mass ratio of 95.5:0.5:2:2 to prepare a cathode slurry with a certain viscosity; then a well-dispersed nano LFMP water-based slurry was added to be mixed, where the solid content of the nano LFMP water-based slurry was 40%, with a total addition of 5% of the solid content of the original cathode slurry, thereby preparing a cathode composite material with LFMP coated on the high-nickel material as a cathode active material.

Subsequently, by coating the aforementioned cathode active material on the aluminum foil current collector, then drying at 100°C , followed by cold pressing, edge trimming, cutting, slitting, and tab welding, a positive electrode/cathode sheet of the lithium battery was made. In Experimental Example 15, the aforementioned positive electrode was further paired with a negative electrode prepared through the following procedure (though the present application is not limited thereto) to form a lithium battery for testing, where the preparation procedure of the negative electrode includes the following steps:

at least 5% by weight of a composite silicon high-entropy material was mixed with graphite to prepare an anode active material, where the anode active material accounted for 95% by weight of the total anode; single-walled carbon nanotubes were added to the anode slurry, where the solid content of the single-walled carbon nanotubes was 0.1% by weight; SBR was added to the anode slurry, where the solid content of SBR was 2.5% by weight; CMC was added as a thickener to the anode slurry, with weight percentage of 2.4%; the anode slurry used deionized water as a solvent system, and after fully dissolving in deionized water and stirring evenly, it was coated on copper foil to prepare an anode electrode; after drying at 100°C, cold pressing, edge trimming, cutting, slitting, and tab welding were performed to prepare a negative electrode/anode sheet of the lithium battery.

The above cathode sheet and anode sheet served as a positive electrode plate and a negative electrode plate, respectively, and configured as a lithium secondary battery for testing in the following manner:

the positive electrode plate and the negative electrode plate were arranged; a separator was arranged between the positive electrode plate and the negative electrode plate to define an accommodating area; the positive and negative electrodes were alternately stacked and immersed in an electrolyte solution, and were placed in an aluminum mold for encapsulation and activation to be used for testing.

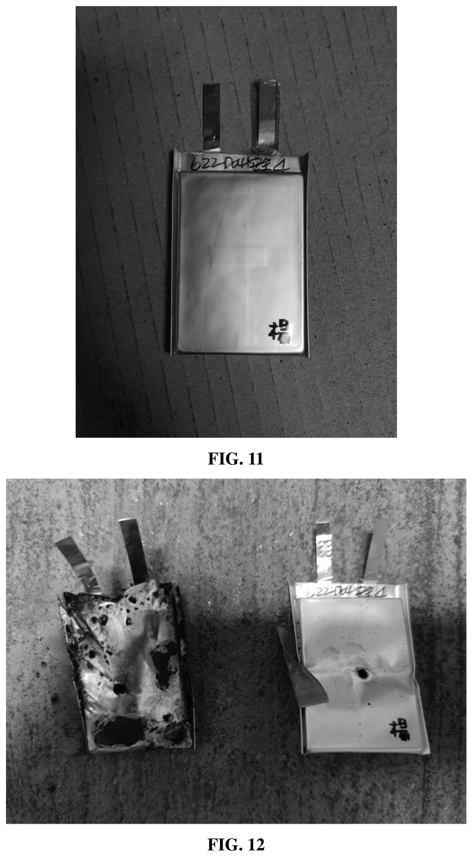

FIG. 11 shows the test results of the lithium secondary battery manufactured in Experimental Example 15 after activation. Referring to FIG. 11, it can be observed that the high-nickel cathode prepared with the ratio in Experimental Example 15 using the aqueous solvent system does not exhibit expansion issues after activation.

Procedure for Experimental Example 16: a high-nickel cathode material, carbon nanotubes, a SBR binder, and a CMC thickener were uniformly mixed and dissolved in deionized water at a mass ratio of 95.5:0.5:2:2 to prepare a cathode slurry with a certain viscosity; then, a well-dispersed nano LFMP water-based slurry was added, where the solid content of the nano LFMP water-based slurry was 40%, with a total addition of 5% of the solid content of the original cathode slurry, thereby preparing a cathode composite material with LFMP coated on the high-nickel material as a cathode active material.

Subsequently, by coating the aforementioned cathode active material on the aluminum foil current collector, then drying at 100°C , followed by cold pressing, edge trimming, cutting, slitting, and tab welding, a positive electrode/cathode sheet of the lithium battery was made. In Experimental Example 16, the aforementioned positive electrode was further paired with a negative electrode prepared through the following procedure (though the present application is not limited thereto) to form a lithium battery for testing, where the preparation procedure of the negative electrode includes the following steps:

at least 5% by weight of a composite silicon high-entropy material was mixed with graphite to prepare an anode active material, where the anode active material accounted for 95% by weight of the total anode; single-walled carbon nanotubes were added to the anode slurry, where the solid content of the single-walled carbon nanotubes was 0.1% by weight; PVDF was added to the anode slurry, where the solid content of PVDF was 4.9% by weight; the anode slurry used NMP as a solvent system, and after fully dissolving in NMP and stirring evenly, it was coated on copper foil to prepare an anode electrode; after drying at 110°C, cold pressing, edge trimming, cutting, slitting, and tab welding were performed to prepare a negative electrode/anode sheet of the lithium battery.

The above cathode sheet and anode sheet served as a positive electrode plate and a negative electrode plate, respectively, and configured as a lithium secondary battery for testing in the following manner:

the positive electrode plate and the negative electrode plate were arranged; a separator was arranged between the positive electrode plate and the negative electrode plate to define an accommodating area; the positive and negative electrodes were alternately stacked and immersed in an electrolyte solution, and were placed in an aluminum mold for encapsulation and activation to be used for testing.

FIG. 12 shows the safety nail puncture test results of the lithium secondary batteries manufactured in Example 16 and Comparative Example 2. Comparative Example 2 involved uniformly mixing a high-nickel cathode material, a conductive agent Super-P, and a binder polyvinylidene fluoride (PVDF) at a mass ratio of 97:1.5:1.5, dissolving them in N-methyl-2-pyrrolidone (NMP) to form a cathode slurry with a certain viscosity, coating the cathode slurry on aluminum foil as a current collector, drying at 110°C, followed by cold pressing, edge trimming, cutting, slitting, and tab welding to produce a lithium battery cathode sheet. Additionally, an anode active material was prepared by mixing at least 5% by weight of nano-silicon powder with graphite, where the anode active material accounted for 95% by weight of the total anode. Single-walled carbon nanotubes were added to the anode slurry at 0.1% by weight of solid content, along with 4.9% by weight of a PVDF binder, and the mixture was dissolved in NMP, stirred uniformly, and coated on copper foil to prepare an anode electrode. After drying at 110°C, cold pressing, edge trimming, cutting, slitting, and tab welding were performed to produce a lithium battery anode sheet. In Comparative Example 2, an aluminum-laminated lithium secondary battery with a lithium secondary battery configuration similar to the aforementioned example was fabricated using the above-mentioned lithium battery cathode and anode sheets for subsequent encapsulation activation testing.

In other words, the cathode active material in the positive/negative electrode of the lithium battery prepared according to the process of Comparative Example 2 does not include the cathode composite material described in the above experimental example.

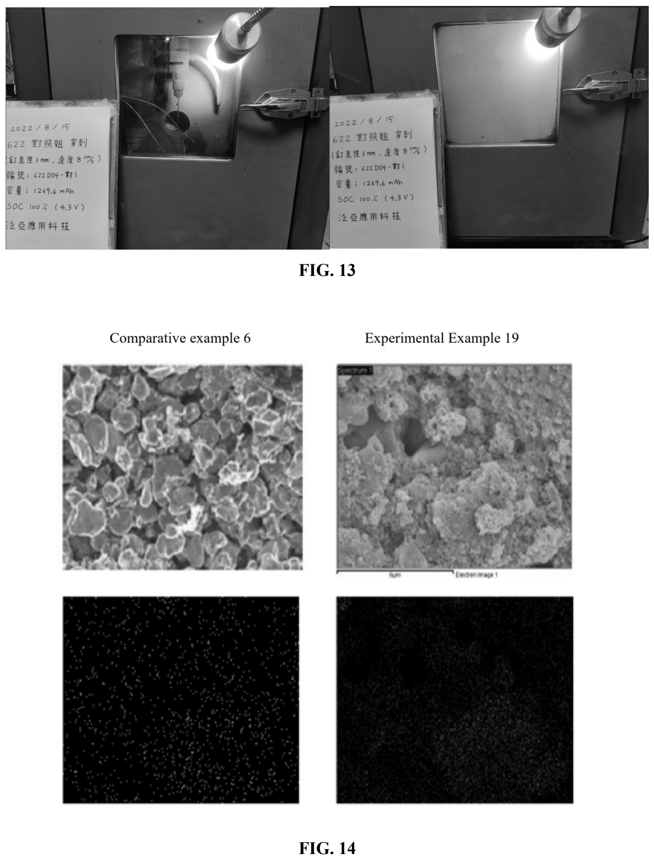

Please refer to FIG. 12. The safety nail puncture test conducted on the lithium batteries made from Experimental Example 16 and Comparative Example 2 shows that no smoke was observed in Experimental Example 16 (as shown on the right side of FIG. 12), but smoke damage was already present in Comparative Example 2 (as shown on the left side of FIG. 12). The test conditions for the safety nail puncture test and the puncture results of the control group (Comparative Example 2) are shown in FIG. 13.

Process steps of Experimental Example 17: a high-nickel cathode material, carbon nanotubes, a SBR binder, and a CMC thickener were uniformly mixed and dissolved in deionized water at a mass ratio of 95.5:0.5:2:2 to prepare a cathode slurry with a certain viscosity; then, a well-dispersed nano LFMP water-based slurry was added, where the solid content of the nano LFMP water-based slurry was 40%, with a total addition of 5% of the solid content of the original cathode slurry, thereby preparing a cathode composite material with LFMP coated on the high-nickel material as a cathode active material.

Subsequently, by coating the aforementioned cathode active material on the aluminum foil current collector, then drying at 100°C, followed by cold pressing, edge trimming, cutting, slitting, and tab welding, a positive electrode/cathode sheet of the lithium battery was made. In Experimental Example 17, the aforementioned positive electrode was further paired with a negative electrode prepared through the following procedure (though the present application is not limited thereto) to form a lithium battery for testing, where the preparation procedure of the negative electrode includes the following steps:

at least 5% by weight of a composite silicon high-entropy material was mixed with graphite to prepare an anode active material, where the anode active material accounted for 95% by weight of the total anode; single-walled carbon nanotubes and graphene were added to the anode slurry, where the solid contents of single-walled carbon nanotubes and graphene were 0.1% by weight each; SBR was added to the anode slurry, where the solid content of SBR was 2.5% by weight; CMC as a thickener was added to the anode slurry, where the weight percentage of CMC was 2.4%; the anode slurry used deionized water as the solvent system, and after fully dissolving in deionized water and stirring evenly, it was coated on copper foil to prepare an anode electrode; after drying at 100°C, cold pressing, edge trimming, cutting, slitting, and tab welding were performed to prepare a negative electrode/anode sheet of the lithium battery.

The above cathode sheet and anode sheet served as a positive electrode plate and a negative electrode plate, respectively, and configured as a lithium secondary battery for testing in the following manner:

the positive electrode plate and the negative electrode plate were arranged; a separator was arranged between the positive electrode plate and the negative electrode plate to define an accommodating area; the positive and negative electrodes were alternately stacked and immersed in an electrolyte solution, and were placed in an aluminum mold for encapsulation and activation to be used for testing.

Procedure for Experimental Example 18: a high-nickel cathode material NCM811, a binder PVDF, and multi-walled carbon nanotubes (4% MWCNT) were mixed and dissolved uniformly in a NMP organic solvent at a solid component mass ratio of 87.3:2:1 to prepare a cathode slurry with a certain viscosity; then, the LFMP slurry prepared based on Experimental Example 10 was added to the aforementioned cathode slurry, with a total addition of 9.7% of the solid content of the original cathode slurry, thereby preparing a cathode composite material with LFMP coated on the cathode material as a cathode active material.

Subsequently, by coating the aforementioned cathode active material on the aluminum foil current collector, then drying at 110°C , followed by cold pressing, edge trimming, cutting, slitting, and tab welding, a positive electrode/cathode sheet of the lithium battery was made. In Experimental Example 18, the aforementioned positive electrode was further paired with a negative electrode prepared through the following procedure (though the present application is not limited thereto) to form a lithium battery for testing, where the preparation procedure of the negative electrode includes the following steps:

at least 5% by weight of a composite silicon high-entropy material was mixed with graphite to prepare an anode active material, where the anode active material accounted for 95% by weight of the total anode; single-walled carbon nanotubes were added to the anode slurry, where the solid content of the single-walled carbon nanotubes (SWCNT) was 0.1% by weight; PVDF was added to the anode slurry, where the weight percentage of the solid content of PVDF was 4.9%; the anode slurry used NMP as the solvent system, and after fully dissolving in NMP and stirring evenly, it was coated on copper foil to prepare an anode electrode; after drying at 110°C , cold pressing, edge trimming, cutting, slitting, and tab welding were performed to prepare a negative electrode/anode sheet of the lithium battery.

The above cathode sheet and anode sheet served as a positive electrode plate and a negative electrode plate, respectively, and configured as a lithium secondary battery for testing in the following manner:

the positive electrode plate and the negative electrode plate were arranged; a separator was arranged between the positive electrode plate and the negative electrode plate to define an accommodating area; the positive and negative electrodes were alternately stacked and immersed in an electrolyte solution, and were placed in an aluminum mold for encapsulation and activation to be used for testing.

Procedure for Experimental Example 19: a high-nickel cathode material NCM811, a binder PVDF, and multi-walled carbon nanotubes (4% MWCNT) were mixed and dissolved uniformly in a NMP organic solvent at a solid component mass ratio of 92.15:2:1 to prepare a cathode slurry with a certain viscosity; then, the LFMP slurry prepared based on Experimental Example 10 was added to the cathode slurry, with a total addition of 4.85% of the solid content of the original cathode slurry, thereby preparing a cathode composite material with LFMP coated on the cathode material as a cathode active material.

Subsequently, by coating the aforementioned cathode active material on the aluminum foil current collector, then drying at 110°C , followed by cold pressing, edge trimming, cutting, slitting, and tab welding, a positive electrode/cathode sheet of the lithium battery was made. In Experimental Example 19, the aforementioned positive electrode was further paired with a negative electrode similar to that described in Experimental Example 18 (though the present application is not limited thereto) to form a lithium battery for testing. The above experimental example may be referred to for the preparation process of the negative electrode and the method of configuring the lithium battery, which will not be repeated here.

Procedure for Experimental Example 20: a lithium cobalt oxide cathode material LCO, a binder PVDF, and multi-walled carbon nanotubes (4% MWCNT) were mixed and dissolved in an NMP organic solvent at a solid content mass ratio of 92.15:2:1 to prepare a cathode slurry with a certain viscosity; then, the LFMP slurry prepared based on Experimental Example 10 was added to the cathode slurry, with a total addition of 4.85% of the solid content of the original cathode slurry, thereby preparing a cathode composite material with LFMP coated on the cathode material as a cathode active material.

Subsequently, by coating the aforementioned cathode active material on the aluminum foil current collector, then drying at 110°C , followed by cold pressing, edge trimming, cutting, slitting, and tab welding, a positive electrode/cathode sheet of the lithium battery was made. In Experimental Example 20, the aforementioned positive electrode was further paired with a negative electrode similar to that described in Experimental Example 18 (though the present application is not limited thereto) to form a lithium battery for testing. The above experimental example may be referred to for the preparation process of the negative electrode and the method of configuring the lithium battery, which will not be repeated here.

Table 4

|  | Battery Weight g | Discharge Energy mWh | Energy Density mAh/g | Battery Internal Resistance mohm | 0.1C First Discharge Efficiency% | 1C Fifth Charge-Discharge Cycle Efficiency | 1C 100th Cycle Capacity Retention Rate |
|---|---|---|---|---|---|---|---|
| Comparative Example 1 | 19.52 | 4422 | 226.40 | 14.1 | 91.45% | 99.35% | 97.98% |
| Experimental Example 12 | 19.45 | 4412 | 226.84 | 14.8 | 92.2% | 99.42% | 98.63% |
| Experimental Example 13 | 19.55 | 4428 | 226.50 | 14.5 | 92.24% | 99.48% | 98.58% |

(continued)

| | Battery Weight g | Discharge Energy mWh | Energy Density mAh/g | Battery Internal Resistance mohm | 0.1C First Discharge Efficiency% | 1C Fifth Charge-Discharge Cycle Efficiency | 1C 100th Cycle Capacity Retention Rate |
|---|---|---|---|---|---|---|---|
| Experimental Example 14 | 19.6 | 4450 | 227.04 | 14.6 | 91.98% | 99.55% | 98.35% |
| Experimental Example 15 | 19.56 | 4411 | 225.51 | 14.3 | 92.25% | 99.65% | 98.19% |
| Experimental Example 16 | 19.58 | 4452 | 227.37 | 14.1 | 91.87% | 99.71% | 98.5% |
| Experimental Example 17 | 19.46 | 4461 | 229.24 | 14.1 | 92.32% | 99.88% | 98.88% |

As revealed by the data from Table 4, in different positive and negative electrode systems, such as the water solvent system or the NMP (N-Methyl-2-pyrrolidone) solvent system, the silicon anode material composite high-entropy material produced after the modification of silicon powder outperforms the silicon powder in the Comparative Example 1 in terms of conductivity, capacity, first-cycle efficiency, and multi-cycle efficiency.

Table 5

| | Original Battery Thickness (mm) | Battery Thickness after Activation (mm) | Battery Thickness after 100 Cycles (mm) | Percentage Increase in Plate Thickness after First Charge (%) | Percentage Increase in Plate Thickness after 50 Charges (%) |
|---|---|---|---|---|---|
| Comparative example 1 | 348 | 351 | 422 | 0.85% | 17.54% |
| Experimental Example 12 | 347 | 349 | 410 | 0.29% | 15.12% |
| Experimental Example 13 | 348 | 350 | 412 | 0.57% | 15.53% |
| Experimental Example 14 | 348 | 350 | 408 | 0.57% | 14.71% |
| Experimental Example 15 | 347 | 350 | 413 | 0.57% | 15.74% |
| Experimental Example 16 | 348 | 351 | 405 | 0.85% | 14.07% |
| Experimental Example 17 | 348 | 350 | 408 | 0.57% | 14.71% |

Table 5 summarizes the expansion characteristics data of Experimental Examples 12 to 17 and Comparative Example 1. From the data of each experimental example disclosed in Table 5, it can be seen that the silicon anode material composite high-entropy material produced after the modification of silicon powder further reduces the expansion of the silicon anode. At the same time, applying this to the LFMP composite in high-nickel cathode materials, using a process with pure water as the solvent system, can meet environmental requirements and maintain the safety of lithium batteries, thereby providing the market with batteries that are both safe and high-capacity.

Table 6

| | Area Weight (mg/cm$^2$) | Area Density (mAh/cm$^2$) | Electrode Density (g/cm$^3$) |
|---|---|---|---|
| Comparative Example 3 | 31.0 | 4.5 | 2.2 |
| Comparative Example 4 | 27.7 | 4.5 | 2.6 |
| Comparative Example 5 | 24.3 | 4.5 | 3.1 |
| Comparative Example 6 | 23.2 | 4.5 | 3.4 |
| Example 15 | 23.8 | 4.5 | 3.3 |

(continued)

|  | Area Weight (mg/cm$^2$) | Area Density (mAh/cm$^2$) | Electrode Density (g/cm$^3$) |
|---|---|---|---|
| Example 16 | 23.6 | 4.5 | 3.4 |
| Example 17 | 23.2 | -4.5 | 3.8 |

Table 6 summarizes the material property data of Examples 15 to 17 and Comparative Examples 3 to 5, where the preparation methods of Comparative Examples 3 to 6 are described as follows:

Comparative Example 3: LFMP was used as the cathode material, mixed with a binder PVDF and multi-walled carbon nanotubes (4% MWCNT) at a solid content mass ratio of 97:2:1, and uniformly dissolved in a NMP organic solvent to form a cathode slurry with a certain viscosity, thereby preparing a cathode electrode/cathode sheet.

Comparative Example 4: a high-nickel cathode material NCM811, a binder PVDF, and multi-walled carbon nanotubes (4% MWCNT) were mixed and uniformly dissolved in a NMP organic solvent at a solid content mass ratio of 38.8:2:1 to form a cathode slurry with a certain viscosity; then, LFMP powder that had not been treated in Examples 7-11 was added to the cathode slurry, thereby preparing a cathode electrode/cathode sheet, where the total addition of LFMP slurry was 58.2% of the original solid content of the cathode slurry.

Comparative Example 5: a high-nickel cathode material NCM811, a binder PVDF, and multi-walled carbon nanotubes (4% MWCNT) were mixed and uniformly dissolved in a NMP organic solvent at a solid content mass ratio of 77.6:2:1 to form a cathode slurry with a certain viscosity; then, LFMP powder that had not been treated in Examples 7-11 was added to the cathode slurry, thereby preparing a cathode electrode/cathode sheet, where the total addition of LFMP slurry was 19.4% of the original solid content of the cathode slurry.

Comparative Example 6: a high-nickel cathode material NCM811, a binder PVDF, and multi-walled carbon nanotubes (4% MWCNT) were mixed and uniformly dissolved in the NMP organic solvent at a solid content mass ratio of 97:2:1 to form a cathode slurry with a certain viscosity, without adding any LFMP, thereby preparing a cathode electrode/cathode sheet.

As shown in Table 6, compared to the positive electrode made with LFMP (Comparative Example 3) or the positive electrode made by adding untreated LFMP powder to the high-nickel cathode material NCM811 (Comparative Example 4), the positive electrodes prepared in Experimental Examples 10-12 based on the preparation method of a lattice-stabilized material described in FIG. 7 exhibit superior electrode density.

FIG. 14 is a comparison of scanning electron microscope (SEM) images of the positive electrodes manufactured in Experimental Example 19 and Comparative Example 6. By observing the microscopic surface morphology of the positive electrodes made in Experimental Example 19 and Comparative Example 6 using SEM, it can be observed that the electrode based on Comparative Example 6 primarily consists of NCM811 particle distribution. In contrast, the electrode based on Experimental Example 19 clearly shows that the nano-sized LFMP particles uniformly coat the surface of NCM811, and through the calibration of Fe and P elements in LFMP, it is confirmed that LFMP is evenly distributed on the surface of NCM811.

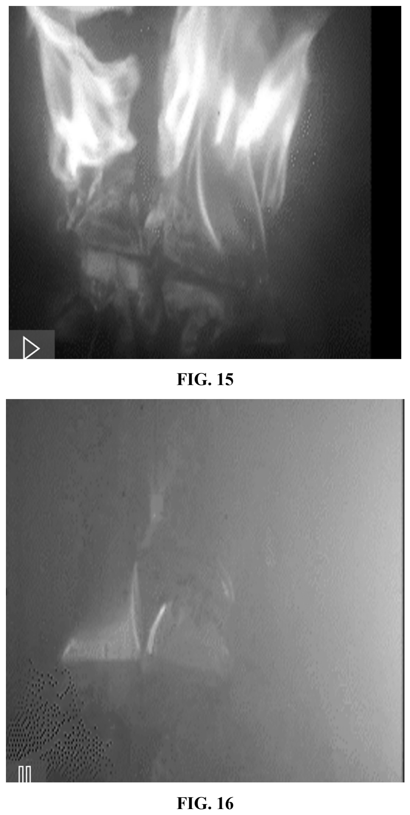

FIG. 15 shows a photograph of a nail puncture test conducted on a lithium battery made based on Comparative Example 6. In this test, the lithium battery made based on Comparative Example 6 was activated, aged, and capacity-graded, then charged to 100% state of charge (SOC) for the nail puncture test, resulting in fire and smoke.

FIG. 16 shows a photograph of a nail puncture test conducted on a lithium battery made based on Comparative Example 5. In this test, the lithium battery made based on Comparative Example 5 was activated, aged, and capacity-graded, then charged to 100% SOC for the nail puncture test, which resulted in no fire but still produced smoke.

From the above, it can be seen that although Comparative Example 5, in which a lower weight percentage of untreated LFMP powder was added, or Comparative Example 6, in which no LFMP powder was added, have electrode densities similar to Experimental Examples 10-12, as shown by the nail puncture test results in FIGS. 15 and 16, lithium batteries made solely with the high-nickel cathode material NCM811 pose a fire risk, and adding insufficient amounts of untreated LFMP powder does not enhance safety.

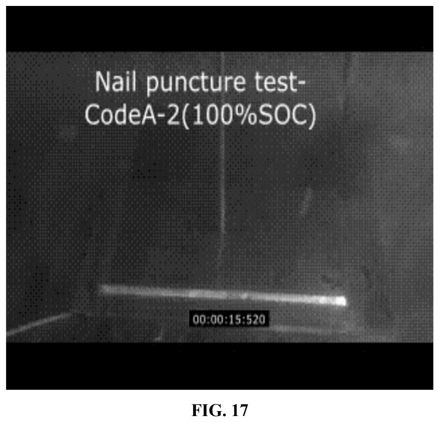

FIG. 17 shows a photograph of a nail puncture test conducted on a lithium battery made based on Experimental Example 18. In this test, the lithium battery made based on Experimental Example 18 was activated, aged, and capacity-graded, then charged to 100% SOC for the nail puncture test, resulting in no fire or smoke, indicating relative safety.

The present application is not limited to the above-mentioned embodiments, and various modifications can be made within the scope indicated by the claims. Embodiments obtained by appropriately combining technical means disclosed in different embodiments shall also fall within technical scope of the present application. Furthermore, new technical features can be formed by combining the technical means disclosed in various embodiments.

It should also be noted that any numerical values mentioned in the present application are not intended to limit the present application to being implemented only at the specified values. Those having ordinary skill in the art can understand that there are allowable errors for each numerical value/component ratio. As long as they do not significantly affect the results/functions intended to be achieved by each experimental example, any values close to the disclosed numerical range are considered to be within the scope disclosed by the present application.

Description of Reference Signs

> 10: Lithium secondary battery
> 11: Cathode
> 110: Cathode material layer
> 111: Cathode current collector
> 12: Separator
> 13: Anode
> 130: Anode material layer
> 131: Anode current collector
> 200: Composite Material
> 210: Silicon particles
> 220: Ceramic material
> 230: Conductive carbon
> M1: Anode active material
> M2: Conductive material
> M3: Binder
> NCT: Carbon nanotube
> S110-S140: Procedure of steps for the preparation method of a cathode active material
> S210-S240, S310-S370: Procedure of steps for the preparation method of an anode active material
> S410-S430: Procedure of steps for the preparation method of a lattice-stabilized material.

**Claims**

1. A lithium secondary battery, comprising:

   a separator;
   a cathode disposed on one side of the separator, wherein the cathode comprises a cathode active material, and the cathode active material comprises a first composite material based on a high-nickel material; and
   an anode disposed on an opposite side of the separator, wherein the anode comprises an anode active material, and the anode active material comprises a second composite material formed from silicon particles and a high-entropy material,
   wherein the high-entropy material consists of at least five elements, and a percentage of each element in the high-entropy material does not exceed 50%.

2. The lithium secondary battery according to claim 1, wherein the high-nickel material has nickel as a metal center for electrochemical redox reactions, and a molar ratio of nickel atoms in the high-nickel material exceeds 50%.

3. The lithium secondary battery according to claim 2, wherein the high-nickel material comprises a material based on a lithium nickel oxide structure.

4. The lithium secondary battery according to claim 3, wherein the material based on the lithium nickel oxide structure comprises at least one of lithium nickel cobalt aluminum oxide ($LiNi_{1-x-y}Co_xAl_yO_2$, NCA) and lithium nickel manganese cobalt oxide ($LiNi_{1-x-y}Mn_xCo_yO_2$ (NMC) or $LiNi_{1-x-y}Co_xMn_yO_2$ (NCM)).

5. The lithium secondary battery according to claim 2, wherein the first composite material further comprises a lattice-stabilized material, wherein the lattice-stabilized material is formed on at least a partial region of a surface of the high-nickel material.

6. The lithium secondary battery according to claim 4, wherein the lattice-stabilized material comprises at least one of lithium iron manganese phosphate ($LiFe_{1-x}Mn_xPO_4$, LFMP) and lithium iron phosphate ($LiFePO_4$).

7. The lithium secondary battery according to claim 6, wherein the lattice-stabilized material is an LFMP slurry, and the LFMP slurry is generated in a dose ratio that falls within the following range:

$$30\% < \frac{E}{A + B + C + D + E} \times 100\% < 60\%$$

where, A, B, C, D, and E represent the dosages of PVP, PVDF, phosphazene, NMP, and LFMP, respectively.

8. The lithium secondary battery according to claim 1, wherein the first composite material further comprises at least one of a conductive material, a binder, and a filler.

9. The lithium secondary battery according to claim 1, wherein the high-entropy material comprises at least one of a high-entropy alloy, a high-entropy oxide, a high-entropy polymer compound, and a high-entropy ceramic.

10. The lithium secondary battery according to claim 9, wherein in the second composite material, the high-entropy material is formed on at least one region of surfaces of the silicon particles, and a chemical formula of the high-entropy material is $Si_{1-(x+y+m+n+z)}(M_xN_yA_mB_nX_z)O_p$, where p = 0.1 - 2, M, N, A and B respectively represent any one of monovalent to tetravalent elements, and valences of M, N, A and B are all different; and X is a transition metal element or a non-monovalent to tetravalent element.

11. The lithium secondary battery according to claim 10, wherein x, y, m, n and z are less than or equal to 0.2, respectively.

12. The lithium secondary battery according to claim 10, wherein M comprises one of lithium and sodium, N comprises one of beryllium, magnesium, calcium, strontium, and barium, A comprises one of boron, aluminum, gallium, and indium, and B comprises one of carbon, silicon, germanium, tin, and lead.

13. The lithium secondary battery according to claim 10, wherein the second composite material further comprises at least one of a conductive material, a binder, and a filler.

14. A method for preparing a lithium secondary battery, comprising the following steps of:

    preparing a positive electrode using a cathode active material;
    preparing a negative electrode using an anode active material;
    stacking the positive electrode, a separator, and the negative electrode in an alternating manner and placing the positive electrode, the separator, and the negative electrode in an electrolyte solution; and
    sealing the positive electrode, the separator, and the negative electrode placed in the electrolyte solution into a mold,
    wherein the cathode active material is made based on a first composite material on a basis of a high-nickel material, and the anode active material is made based on a second composite material formed from silicon particles and a high-entropy material;
    wherein the high-entropy material consists of at least five elements, and a percentage of each element in the high-entropy material does not exceed 50%.

15. The method for preparing a lithium secondary battery according to claim 14, wherein the high-nickel material has nickel as a metal center for electrochemical redox reactions, and a molar ratio of nickel atoms in the high-nickel material exceeds 50%.

16. The method for preparing a lithium secondary battery according to claim 14, wherein a process of preparing the cathode active material comprises:

    adding at least one of water, an aqueous solution, and an organic solvent as a solvent system into a reaction tank;
    placing the high-nickel material into the reaction tank to be mixed with the solvent system;
    adding a lattice-stabilized material into the solvent system; and
    mixing the high-nickel material and the lattice-stabilized material in the solvent system to generate the first composite material, which has the lattice-stabilized material attached to at least part of a surface structure of the high-nickel material.

17. The method for preparing a lithium secondary battery according to claim 16, wherein the lattice-stabilized material comprises at least one of lithium iron manganese phosphate and lithium iron phosphate.

18. The method for preparing a lithium secondary battery according to claim 17, wherein the lattice-stabilized material is prepared based on the following process:

adding a dispersant to a second organic solvent;
adding powdered lithium iron manganese phosphate to the second organic solvent containing the dispersant to generate a mixed material; and
grinding the mixed material to generate the slurry-like lattice-stabilized material.

19. The method for preparing a lithium secondary battery according to any one of claims 14 to 18, wherein a process for preparing the anode active material comprises:

mixing water and an organic solvent in a reaction tank;
placing a silicon material in the reaction tank to contact the organic solvent;
adding a precursor of a constituent element of the high-entropy material to the organic solvent; and
mixing the precursor and the silicon material in the organic solvent to generate the second composite material containing silicon particles and the high-entropy material,
wherein a chemical formula of the high-entropy material is $Si_{1-(x+y+m+n+z)}(M_xN_yA_mB_nX_z)O_p$, where $p = 0.1 - 2$, M, N, A and B respectively represent any one of monovalent to tetravalent elements, and valences of M, N, A and B are all different; and X is a transition metal element or a non-monovalent to tetravalent element.

20. The method for preparing a lithium secondary battery according to claim 19, wherein the process for preparing the anode active material further comprises:

drying the second composite material at a first temperature; and
heating the dried second composite material at a second temperature in an inert environment to generate the powdered second composite material.

21. The method for preparing a lithium secondary battery according to claim 20, wherein the first temperature is 50°C-150°C.

22. The method for preparing a lithium secondary battery according to claim 21, wherein the first temperature is between 900°C-1500°C.

**FIG. 1**

**FIG. 2A**

**FIG. 2B**

**FIG. 3A**

**FIG. 3B**

| S110 | Adding water, an aqueous solution, or an organic solvent to a reaction tank as a solvent system |
|---|---|

| S120 | Placing a high-nickel material into the reaction tank to be mixed with the solvent system |
|---|---|

| S130 | Adding a lattice-stabilized material to the solvent system |
|---|---|

| S140 | Thoroughly mixing the high-nickel material and the lattice-stabilized material in the solvent system to generate a cathode composite material, where in the structure of the cathode composite material, the lattice-stabilized material will be attached to at least part of the surface of the high-nickel material |
|---|---|

**FIG. 4**

| S210 | Mixing water with an organic solvent in a reaction tank |
|---|---|

| S220 | Placing a silicon material in the reaction tank to contact the organic solvent |
|---|---|

| S230 | Adding precursors of multiple elements to the organic solvent, where the multiple elements are the constituent elements of the high-entropy material |
|---|---|

| S240 | Thoroughly mixing the precursors and silicon material in the organic solvent to generate a composite material/high-entropy silicon composite material containing silicon particles and the high-entropy material composed of the multiple elements |
|---|---|

**FIG. 5**

S310 — Mixing water and an organic solvent in a reaction tank

S320 — Processing a silicon material into powdered silicon units

S330 — Placing the silicon units in the reaction tank to contact the organic solvent

S340 — Adding precursors of various elements to the organic solvent, where the various elements are constituent elements of a high-entropy material

S350 — Thoroughly mixing the precursors and the silicon units in the mixture of water and organic solvent to undergo hydrolysis and polymerization reactions, thereby generating a composite material containing silicon particles and the high-entropy material

S360 — Drying the composite material at a first temperature

S370 — Heating the dried composite material at a second temperature in an inert environment to generate a powdered composite material

**FIG. 6**

S410 ── Adding a dispersant to an organic solvent

S420 ── Adding powdered LFMP to the organic solvent containing the dispersant to form a mixed material

S430 ── Grinding the mixed material to generate a slurry-like lattice-stabilized material

**FIG. 7**

Experimental Example 1

a-Si

ICSD-51688-Si

Wavelength (degree)

Intensity (a.u.) 强度（a.u.）

**FIG. 8**

NCT

**FIG. 9**

20 nm

**FIG. 10**

**FIG. 11**

**FIG. 12**

**FIG. 13**

Comparative example 6          Experimental Example 19

**FIG. 14**

**FIG. 15**

**FIG. 16**

**FIG. 17**

## INTERNATIONAL SEARCH REPORT

International application No.

**PCT/CN2024/072487**

### A. CLASSIFICATION OF SUBJECT MATTER

H01M 4/62(2006.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 锂, 电池, 正极, 负极, 高镍, 高熵, 包覆, lithium, battery, positive electrode, negative electrode, high nickel, high entropy, coating

### C. DOCUMENTS CONSIDERED TO BE RELEVANT

| Category* | Citation of document, with indication, where appropriate, of the relevant passages | Relevant to claim No. |
|---|---|---|
| Y | WO 2022247893 A1 (SINO APPLIED TECHNOLOGY TAIWAN CO., LTD.) 01 December 2022 (2022-12-01)<br>description, page 6, paragraph 5-page 20, paragraph 2, and figures 1-16 | 1-9, 14-18 |
| Y | CN 108777291 A (CHENGDU NEW KELI CHEMICAL SCIENCE CO., LTD.) 09 November 2018 (2018-11-09)<br>description, paragraphs [0009]-[0033] | 1-9, 14-18 |
| Y | US 2021328217 A1 (NATIONAL TSING HUA UNIVERSITY) 21 October 2021 (2021-10-21)<br>description, paragraphs [0007]-[0066], and figures 1-8B | 1-9, 14-18 |
| A | CN 112531157 A (SOUNDON NEW ENERGY TECHNOLOGY CO., LTD.) 19 March 2021 (2021-03-19)<br>entire document | 1-22 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 February 2024** | **06 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/072487**

| Patent document cited in search report | | | Publication date (day/month/year) | Patent family member(s) | | | Publication date (day/month/year) |
|---|---|---|---|---|---|---|---|
| WO | 2022247893 | A1 | 01 December 2022 | TW | 202247511 | A | 01 December 2022 |
| CN | 108777291 | A | 09 November 2018 | | None | | |
| US | 2021328217 | A1 | 21 October 2021 | TW | 202141831 | A | 01 November 2021 |
| | | | | TW | 725822 | B1 | 21 April 2021 |
| CN | 112531157 | A | 19 March 2021 | | None | | |

Form PCT/ISA/210 (patent family annex) (July 2022)